# EUROPEAN PATENT SPECIFICATION

(11) **EP 3 198 965 B1**
(45) Date of publication and mention of the grant of the patent: **19.06.2019**
(21) Application number: 15781456.7
(22) Date of filing: 25.09.2015
(51) Int. Cl.: H04W 72/12, H04W 16/14

(54) **CROSS-CARRIER INDICATION SIGNAL IN LBT SYSTEMS**
TRÄGERÜBERGREIFENDES ANZEIGESIGNAL IN LBT-SYSTEMEN
SIGNAL D'INDICATION DE PORTEUSE TRANSVERSALE DANS DES SYSTÈMES LBT

(30) Priority: 26.09.2014 US 201462055726 P
(43) Date of publication of application: 02.08.2017
(73) Proprietor: Telefonaktiebolaget LM Ericsson (publ), 164 83 Stockholm (SE)
(72) Inventor: MUKHERJEE, Amitav, Fremont, California 94538 (US); KOORAPATY, Havish, Saratoga, California 95070 (US); CHENG, Jung-fu, Fremont, California 94539 (US)
(74) Representative: Zacco Sweden AB
(86) International application number: PCT/SE2015/051007
(87) International publication number: WO 2016/048228

(56) References cited:
- WO-A2-2009/132290
- WO-A2-2012/109195
- ERICSSON: "On Scheduling in LAA", 3GPP DRAFT; R1-151135, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Paris, France; 20150324 - 20150326 18 March 2015 (2015-03-18), XP050951460, Retrieved from the Internet: URL:http://www.3gpp.org/ftp/tsg_ran/WG1_RL 1/TSGR1_AH/LTE_LAA_1503/Docs/ [retrieved on 2015-03-18]
- NOKIA NETWORKS: "On reducing the number of DL control blind decodes", 3GPP DRAFT; R1-154467, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Beijing, China; 20150824 - 20150828 14 August 2015 (2015-08-14), XP050993013, Retrieved from the Internet: URL:http://www.3gpp.org/ftp/tsg_ran/WG1_RL 1/TSGR1_82/Docs/ [retrieved on 2015-08-14]
- ERICSSON: "On Scheduling for LAA with Only Downlink Transmissions", 3GPP DRAFT; R1-152001, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Belgrade, Serbia; 20150420 - 20150424 19 April 2015 (2015-04-19), XP050934850, Retrieved from the Internet: URL:http://www.3gpp.org/ftp/Meetings_3GPP_ SYNC/RAN1/Docs/ [retrieved on 2015-04-19]
- ERICSSON: "Further consideration on joint grant for up to 32 CCs", 3GPP DRAFT; R1-154418, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Beijing, China; 20150824 - 20150828 14 August 2015 (2015-08-14), XP050994009, Retrieved from the Internet: URL:http://www.3gpp.org/ftp/tsg_ran/WG1_RL 1/TSGR1_82/Docs/ [retrieved on 2015-08-14]

## Description

### Technical field

The present disclosure pertains to wireless communication, in particular to wireless communication utilizing Listen-Before-Talk before accessing a carrier.

### Background

The 3GPP initiative "License Assisted Access" (LA) intends to allow LTE equipment to also operate in the unlicensed 5 GHz radio spectrum. The unlicensed 5 GHz spectrum is used as a complement to the licensed spectrum. Accordingly, devices connect in the licensed spectrum (e.g. via a primary cell or PCell) and may use carrier aggregation to benefit from additional transmission capacity in the unlicensed spectrum (e.g., via a secondary cell or SCell). To reduce the changes required for aggregating licensed and unlicensed spectrum, the LTE frame timing in the primary cell is simultaneously used in the secondary cell.

Regulatory requirements, however, may not permit transmissions in the unlicensed spectrum without prior channel sensing. Since the unlicensed spectrum must be shared with other radios of similar or dissimilar wireless technologies, a so called listen-before-talk (LBT) method needs to be applied. Today, the unlicensed 5 GHz spectrum is mainly used by equipment implementing the IEEE 802.11 Wireless Local Area Network (WLAN) standard. This standard is known under its marketing brand "Wi-Fi."

The LBT procedure may lead to uncertainty at the eNB regarding whether it will be able to transmit a DL subframe(s) or not. This may lead to a corresponding uncertainty at the UE as to if it actually has a subframe to decode or not. An analogous uncertainty exists in the UL direction where the eNB is uncertain if the UEs scheduled on the SCell actually transmitted or not.

This may arise if a network node or terminal is scheduled to transmit data using the unlicensed band (e.g. scheduled by a network node), and has to perform a LBT procedure before transmitting as scheduled. The LBT may result in no transmission being admissible or provided, e.g. if another transmitter utilizing the unlicensed band is active. The receiving side (e.g., terminal or network node), which may be informed about/expecting the scheduled transmission, may try to decode data it assumes being there, but which actually has not been transmitted. This may lead to a variety of problems, for example waste of resources, e.g. computing resources, wrong assumptions about connection quality, etc.

Examples of prior art documents: WO 2009/132290 A2 discloses method and apparatus for simultaneously receiving on two carriers, and WO 2012/109195 A2 discloses method and apparatus for operating supplementary cells in licensed exempt spectrum.

### Summary

The present invention is defined by the appended independent claims. Advantageous implementation details of the invention are defined by the dependent claims.

It is an object of the present disclosure to present approaches to limit or avoid above-mentioned problems, in particular regarding the mistaken assumption that data has been transmitted on a carrier or band, when in fact no transmission has been performed.

There are defined and claimed a method for operating a first node according to claim 1 and a method for operating a second node according to claim 7. There are also defined and claimed a first node according to claim 4 and a second node according to claim 10. There are also defined and claimed a program product according to claim 13 and a carrier medium according to claim 14.

Moreover, a terminal for a wireless communication network is proposed. The terminal is configured with a first cell and/or first uplink carrier and a second cell and/or second uplink carrier. Further, the terminal is adapted for transmitting a cross-carrier indication signal on the first cell and/or first uplink carrier indicating whether the terminal has transmitted data on the second cell and/or second uplink carrier.

A method for operating a terminal in a wireless communication network is also disclosed. The terminal is configured with a first cell and/or first downlink carrier and a second cell and/or second downlink carrier. The method comprises receiving data on the second cell and/or second downlink carrier, and receiving a cross-carrier indication signal, CIS, on the first cell and/or first downlink carrier; wherein the CIS indicates whether a transmission on the second cell and/or second downlink carrier was provided. The method further comprises processing the data received on the second cell and/or second downlink carrier based on the CIS.

In addition, a method for operating a network node is suggested. The network node is connected to a terminal via a first cell and/or first uplink carrier and a second cell and/or second uplink carrier. The method comprises receiving data on the second cell and/or second uplink carrier, and receiving a cross-carrier indication signal, CIS, on the first cell and/or first uplink carrier, wherein the CIS indicates whether a transmission on the second cell and/or second uplink carrier was provided by the terminal. The method also comprises processing the data received on the second cell and/or second uplink carrier based on the CIS.

A terminal for a wireless communication network is described as well. The terminal is configured with a first cell and/or first downlink carrier and a second cell and/or second downlink carrier. The terminal further is adapted for receiving data on the second cell and/or second downlink carrier, and for receiving a cross-carrier indication signal, CIS, on the first cell and/or first downlink carrier; wherein the CIS indicates whether a transmission on the second cell and/or second downlink carrier was provided by the network. Moreover, the terminal is adapted for processing the data received on the second cell and/or second downlink carrier based on the CIS.

There is also disclosed a network node for a wireless communication network, the network node being connected to a terminal via a first cell and/or first uplink carrier and a second cell and/or second uplink carrier. The network node is adapted for receiving data on the second cell and/or second uplink carrier, and for receiving a cross-carrier indication signal, CIS, on the first cell and/or first uplink carrier; wherein the CIS indicates whether a transmission on the second cell and/or second uplink carrier was provided by the terminal. The network node is further adapted for processing the data received on the second cell and/or second uplink carrier based on the CIS.

A program product comprising code executable by control circuitry, the code causing the control circuitry to carry out and/or control any of the methods described herein is also disclosed.

Moreover, there is disclosed a carrier medium carrying and/or storing a program product as described herein and/or code executable by control circuitry, the code causing the control circuitry to perform and/or control any of the methods described herein.

By using the CIS in the first cell or carrier, a receiver may reliably be informed whether signaling in the second cell or carrier is intended for the receiver and/or should be processed, e.g. decoded and/or demodulated.

### Brief description of the drawings

The figures in the drawings are provided to illustrate specific approaches and contexts, and are not intended to limit the scope of the approaches and ideas presented herein. In the drawings,
Figure 1 shows an LTE resource structure;
Figure 2 shows an LTE frame structure;
Figure 3 shows an LTE subframe structure;
Figure 4 shows a carrier aggregated bandwidth;
Figure 5 shows a scenario utilizing CCA;
Figure 6 shows an exemplary LAA arrangement;
Figure 7 shows an example of data transmission scenario in an LAA arrangement;
Figure 8 shows another example of data transmission scenario in an LAA arrangement;
Figure 9 shows an example of UL data transmission;
Figure 10 shows an example of a terminal;
Figure 11 shows an example of a network node;
Figures 12a and 12b show examples of a method for operating a terminal and a terminal, respectively;
Figures 13a and 13b show other examples of a method for operating a terminal and a terminal, respectively;
Figures 14a and 14b show examples of a method for operating a network node and a network node, respectively; and
Figures 15a and 15b show other examples of a method for operating a network node and a network node, respectively.

### Detailed description

In the following, there are described approaches in the context of LTE. However, the approaches may be implemented in the context of other communication standards or corresponding systems as well.

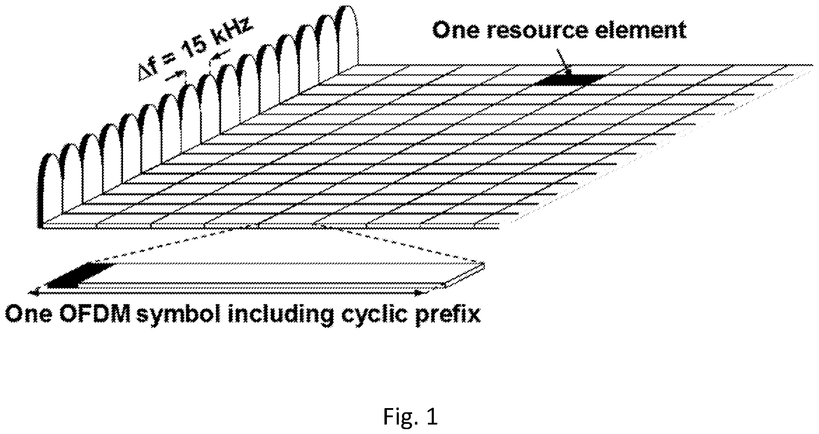

LTE uses OFDM in the downlink and DFT-spread OFDM (also referred to as single-carrier FDMA) in the uplink. The basic LTE downlink physical resource can thus be seen as a time-frequency grid as illustrated in Figure 1, where each resource element corresponds to one OFDM subcarrier during one OFDM symbol interval. The uplink subframe has the same subcarrier spacing as the downlink and the same number of SC-FDMA symbols in the time domain as OFDM symbols in the downlink.

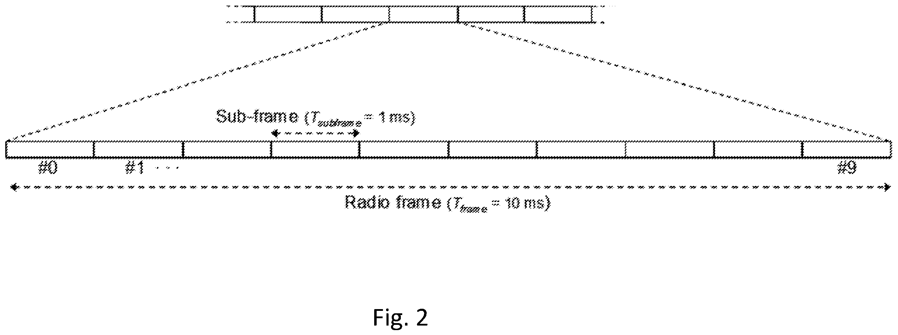

In the time domain, LTE downlink transmissions are organized into radio frames of 10 ms, each radio frame consisting of ten equally-sized subframes of length Tsubframe = 1 ms as shown in Figure 2. For normal cyclic prefix, one subframe consists of 14 OFDM symbols. The duration of each symbol is approximately 71.4 µs.

Furthermore, the resource allocation in LTE is typically described in terms of resource blocks, where a resource block corresponds to one slot (0.5 ms) in the time domain and 12 contiguous subcarriers in the frequency domain. A pair of two adjacent resource blocks in time direction (1.0 ms) is known as a resource block pair. Resource blocks are numbered in the frequency domain, starting with 0 from one end of the system bandwidth.

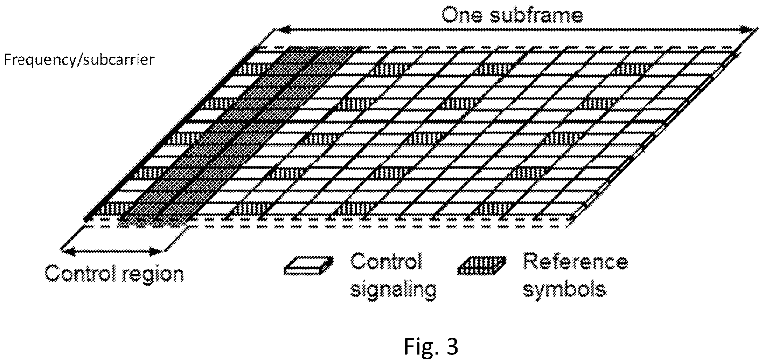

Downlink transmissions may be dynamically scheduled, i.e., in each subframe the base station transmits control information about which terminals data is transmitted to and upon which resource blocks the data is transmitted, in the current downlink subframe. This control signaling is typically transmitted in the first 1, 2, 3 or 4 OFDM symbols in each subframe, and the number n = 1, 2, 3 or 4 is known as the Control Format Indicator (CFI) which is sent using the PCFICH. The downlink subframe also contains common reference symbols, which are known to the receiver and used for coherent demodulation of e.g. the control information. A downlink system with CFI = 3 OFDM symbols as control in a control region is illustrated in Figure 3.

From LTE Rel-11 onwards, above described resource assignments can also be scheduled on the enhanced Physical Downlink Control Channel (EPDCCH). For Rel-8 to Rel-10 only the Physical Downlink Control Channel (PDCCH) is available. The reference symbols shown in Figure 3 are the cell specific reference symbols (CRS) and are used to support multiple functions including fine time and frequency synchronization and channel estimation for certain transmission modes.

The Physical Downlink Control Channel (PDCCH) and Enhanced PDCCH (EPDCCH) are described in the following. The PDCCH/EPDCCH is used to carry downlink control information (DCI) such as scheduling decisions and power-control commands. More specifically, DCI may include:
- Downlink scheduling assignments, including PDSCH resource indication, transport format, hybrid-ARQ information, and control information related to spatial multiplexing (if applicable). A downlink scheduling assignment also includes a command for power control of the PUCCH used for transmission of hybrid-ARQ acknowledgements in response to downlink scheduling assignments.
- Uplink scheduling grants, including PUSCH resource indication, transport format, and hybrid-ARQ-related information. An uplink scheduling grant also includes a command for power control of the PUSCH.
- Power-control commands for a set of terminals as a complement to the commands included in the scheduling assignments/grants.

One PDCCH/EPDCCH may carry one DCI message containing one of the groups of information listed above. As multiple terminals can be scheduled simultaneously, and each terminal can be scheduled on both downlink and uplink simultaneously, there must be a possibility to transmit multiple scheduling messages within each subframe. Each scheduling message is transmitted on separate PDCCH/EPDCCH resources, and consequently there are typically multiple simultaneous PDCCH/EPDCCH transmissions within each subframe in each cell.

Furthermore, to support different radio-channel conditions, link adaptation can be used, where the code rate of the PDCCH/EPDCCH is selected by adapting the resource usage for the PDCCH/EPDCCH, to match the radio-channel conditions.

The Physical Hybrid ARQ Indicator Channel (PHICH) is described in the following.

The PHICH conveys the hybrid ARQ ACK/NACK for the UL transmissions sent on the PUSCH. The indicator is set to 1 for an ACK and 0 for a NACK, followed by BPSK modulation and factor-3 repetition coding. Each of the three symbols is spread using a length-4 orthogonal Walsh sequence for normal cyclic prefix, followed by mapping to REs in the DL subframe. Thus, 12 REs are needed for a single PHICH; these REs cannot overlap with PCFICH or CRS. Different PHICHs use different orthogonal Walsh sequences, and may be mapped to the same REs. The PHICH is sent within the first 3 OFDM symbols of a subframe, and cannot be transmitted in the PDSCH region. In the time domain, if the UL transmission occurs in subframe n, the corresponding PHICH will be sent in subframe n+4. A terminal or UE may determine the frequency-domain location of its PHICH based on the lowest first-slot PRB value of its corresponding UL grant and its DMRS cyclic shift. On the UL, the terminal or UE sends ACK/NACK for DL transmissions using the PUCCH or PUSCH, instead of the PHICH.

Carrier aggregation is described in the following.The LTE Rel-10 standard supports bandwidths larger than 20 MHz. One important requirement on LTE Rel-10 is to assure backward compatibility with LTE Rel-8. This should also include spectrum compatibility. That would imply that an LTE Rel-10 carrier, wider than 20 MHz, should appear as a number of LTE carriers to an LTE Rel-8 terminal. Each such carrier can be referred to as a Component Carrier (CC). In particular for early LTE Rel-10 deployments it can be expected that there will be a smaller number of LTE Rel-10-capable terminals compared to many LTE legacy terminals.

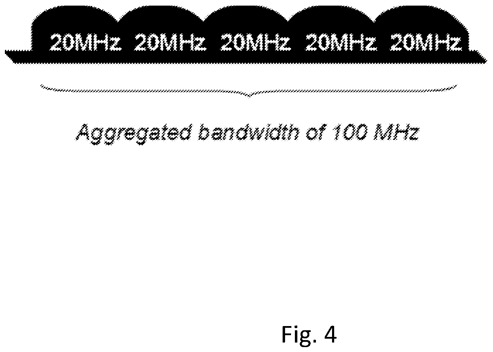

Therefore, an efficient use of a wide carrier also for legacy terminals should be assured, i.e. that it is possible to implement carriers where legacy terminals can be scheduled in all parts of the wideband LTE Rel-10 carrier. The straightforward way to obtain this would be by means of Carrier Aggregation (CA). CA implies that an LTE Rel-10 terminal can receive multiple CC, where the CC have, or at least the possibility to have, the same structure as a Rel-8 carrier. CA is illustrated in Figure 4. A CA-capable terminal or UE is assigned a primary cell (PCell) which is always activated, and one or more secondary cells (SCells) which may be activated or deactivated dynamically.

The number of aggregated CC as well as the bandwidth of the individual CC may be different for uplink and downlink. A symmetric configuration refers to the case where the number of CCs in downlink and uplink is the same whereas an asymmetric configuration refers to the case that the number of CCs is different. It is important to note that the number of CCs configured in a cell may be different from the number of CCs seen by a terminal: A terminal may for example support more downlink CCs than uplink CCs, even though the cell is configured with the same number of uplink and downlink CCs.

In addition, carrier aggregation may provide the ability to perform cross-carrier scheduling. This mechanism allows a (E)PDCCH on one CC to schedule data transmissions on another CC by means of a 3-bit Carrier Indicator Field (CIF) inserted at the beginning of the (E)PDCCH messages. For data transmissions on a given CC, a UE or terminal expects to receive scheduling messages on the (E)PDCCH on just one CC - either the same CC, or a different CC via cross-carrier scheduling; this mapping from (E)PDCCH to PDSCH may be configured semi-statically.

The PHICH is transmitted on the downlink CC that was used to transmit the corresponding uplink resource grant, but the modulation, spreading and RE mapping follow the same principles as described above

A Wireless Local Area Network (WLAN) is described in the following. In typical deployments of WLAN, carrier sense multiple access with collision avoidance (CSMA/CA) is used for medium access. This means that the channel is sensed to perform a clear channel assessment (CCA), and a transmission is initiated only if the channel is declared as Idle. In case the channel is declared as Busy, the transmission is essentially deferred until the channel is deemed to be Idle. This may be seen as LBT (listen before talk) mechanism.

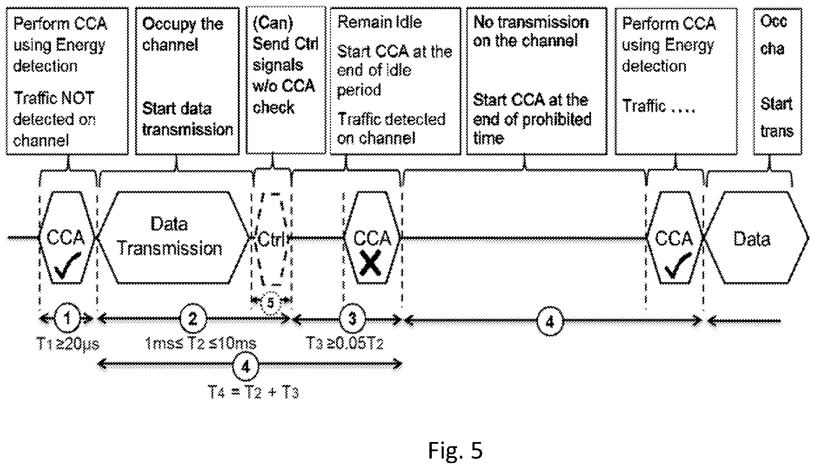

When the range of several APs (access points) using the same frequency overlap, this means that all transmissions related to one AP might be deferred in case a transmission on the same frequency to or from another AP which is within range can be detected. Effectively, this means that if several APs are within range, they will have to share the channel in time, and the throughput for the individual APs may be severely degraded. A general illustration of a possible listen before talk (LBT) mechanism is shown in Figure 5.

Licensed assisted access (LA) to unlicensed spectrum using LTE is described in the following. Up to now, the spectrum used by LTE is dedicated to LTE. This has the advantage that LTE system does not need to care about the coexistence issue and the spectrum efficiency can be maximized. However, the spectrum allocated to LTE is limited, which means it may not meet the ever increasing demand for larger throughput from applications/services. Therefore, extending LTE to exploit unlicensed spectrum in addition to licensed spectrum is suggested. Unlicensed spectrum can, by definition, be simultaneously used by multiple different technologies. Therefore, for LTE the issue of coexistence with other systems such as IEEE 802.11 (Wi-Fi) arises. Operating LTE in the same manner in unlicensed spectrum as in licensed spectrum can seriously degrade the performance of Wi-Fi, as Wi-Fi will not transmit once it detects the channel is occupied, based on the LBT mechanism.

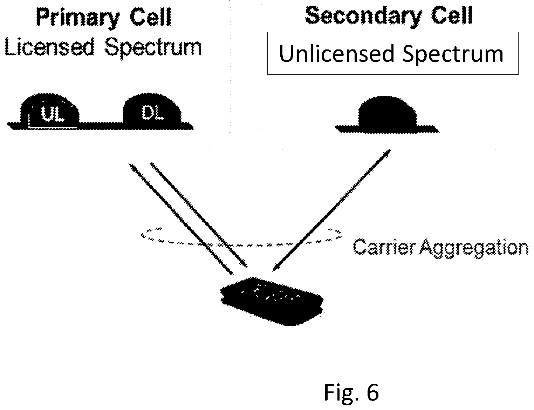

One way to utilize the unlicensed spectrum reliably is to transmit essential control signals and channels (pertaining to the unlicensed spectrum) on a licensed carrier. For example, as shown in Figure 6, a terminal or UE may be connected to or configured with a PCell in the licensed band and one or more SCells in the unlicensed band. In this description, a secondary cell in unlicensed spectrum may be referred to as license assisted secondary cell (LA SCell).

Due to the uncertainty in data transmission on the LA SCell, it is possible for terminals or UEs to be scheduled for DL service (e.g., the terminal is scheduled to receive data in a scheduled subframe) on the SCell, but actually not receive any data in that subframe due to failed SCell LBT. This scheduling may have been performed in that same subframe period via cross-carrier scheduling on the PCell. Due to implementation constraints in non-colocated deployment scenarios, the PCell scheduling grants may be sent without having prior knowledge of the LBT status of the SCell, and the PCell subframe cannot be modified in time due to communication latency between the remote SCell and PCell.

Generally, and independent of the nature of the unlicensed spectrum or the LA SCell, if a terminal or UE has been scheduled on a particular subframe on the LA SCell and tries to perform channel estimation, time-frequency tracking, or decoding when no subframe has actually been transmitted by the SCell, it may severely degrade the accuracy of the tracking loops, RRM measurements, and receiver buffer/soft buffer samples. There is currently no mechanism to prevent the scheduled terminals or UEs from attempting to decode a non-existent subframe or data in a subframe not intended for it, which may be blocking the subframe/LA SCell using another technology, e.g. Wi-Fi.

An analogous uncertainty may exist in the UL direction where an eNB or network node may be uncertain if a terminal UEs scheduled on the SCell actually transmitted or not. There is currently no mechanism to prevent the network node or eNB from attempting to decode non-existent PUSCH, PUCCH, and/or SRS signals, respectively signals not indented.

There are disclosed methods and devices in which a cross-carrier confirmation signal is provided to indicate transmission of a valid subframe.
Generally, there may be provided a network node, terminal or method, in which an indication of the result of a LBT regarding an LA Scell is transmitted on another cell.

In particular, it is suggested to include a cross-carrier confirmation signal in a subframe transmitted in a Pcell after the subframe in which a grant has been transmitted, in particular in the next PCell subframe transmitted after the one in which the cross-carrier scheduling grants were sent. Scheduled UEs or terminals may verify, e.g. autonomously verify, that a valid subframe is actually available for decoding on the LBT carrier/the LA SCell. If no confirmation signal or indication is detected, the scheduled UEs may discard their received samples for that subframe duration. It may thus be avoided that scheduled UEs attempt to decode non-existent subframes on a DL LBT carrier or LA SCell.

Alternatively or additionally, it is suggested to include a confirmation signal or indication in a subsequent, in particular the next, UL subframe transmitted by the UE or terminal on a Pcell, after the subframe with SCell grants. It thus may be avoided that the eNB or base station attempts to decode non-existent PUSCH, PUCCH, or SRS signals on a UL LBT carrier or LA Scell.

It described herein to provide a new confirmation signal (which may be a CIS) for DL and UL subframes on a PCell and/or a licensed carrier or cell designed for the purpose described above.

There is also disclosed a network node, in particular an eNodeB, adapted to carry out any of the methods disclosed herein being performed by a network node. Moreover, there is disclosed a terminal and/or user equipment adapted to carry out any one of the methods described herein being performed by a terminal or UE.

With the use of an indication or confirmation signal, there is effected, inter alia:
On the DL, the confirmation signal may be used by UEs or terminals to verify if their scheduled grant was actually transmitted on the LBT carrier;
On the DL, the confirmation signal may be used by UEs tor terminal to verify if discovery reference signals were actually transmitted on the LBT carrier / the LA Scell.

On the UL, the confirmation signal may be used by eNBs or network node to verify if the UEs or terminals with scheduled UL grants actually transmitted on the LBT carrier or LA SCell.

Here follows a description of the new cross-carrier indication signal (CIS) transmitted on the PCell to indicate if a subframe was actually transmitted on the LA SCell in the previous TTI. The CIS may be transmitted on either/both DL and UL subframes on the LBT carrier, for both FDD and TDD systems.

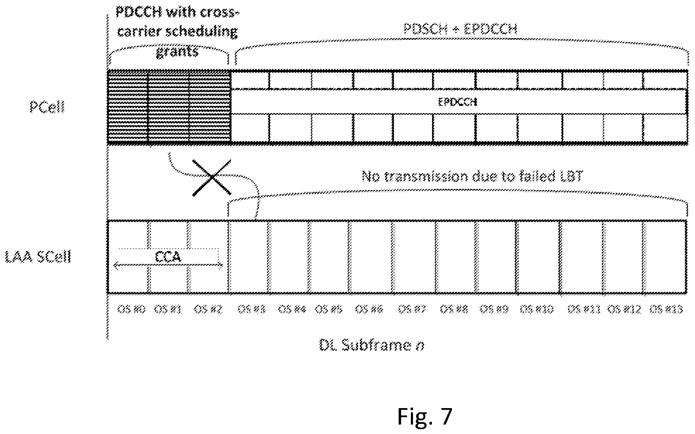

Downlink CIS is described as follows.The main motivation for introducing the CIS is the following example scenario illustrated in Figure 7. Assume an eNB or network node operates two carriers, with the PCell on a licensed band and the SCell as a LA carrier that must perform LBT before a new transmission. On some subframe n, the PCell employs cross-carrier scheduling in its PDCCH to blindly schedule a set of UEs for reception on the SCell which is currently not occupying the channel, i.e., the SCell was silent during at least subframe n-1. Therefore, the SCell must perform LBT to determine if it is allowed to transmit in subframe n. If the LBT of the SCell fails after an extended CCA over the first 3 OFDM symbols, then it does not transmit anything on subframe n, however, the UEs that were able to decode their scheduling grants on the PCell are unaware of the lack of SCell transmission. Note that nothing can be transmitted in the PDCCH region of the LA SCell due to LBT at the start of the subframe.

The above example is easily extended to the case where the cross-carrier scheduling was done using the EPDCCH of the PCell, or a scenario with multiple LA SCells, or when the cross-carrier scheduling is performed by another SCell that currently occupies the channel.

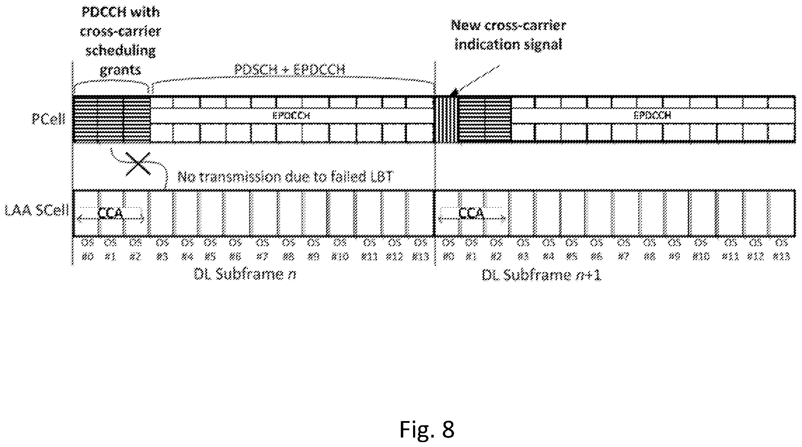

If a UE has been scheduled on a particular subframe on the LA SCell and tries to perform channel estimation, time-frequency tracking, RRM measurements, or decoding when no subframe has actually been transmitted by the SCell, it may severely degrade the accuracy of the tracking loops, RRM measurements, and receiver buffer/soft buffer samples. This is in addition to wasteful power consumption by the UEs which try to decode the missing subframe on the SCell. Currently there is no mechanism to inform the UEs of this scenario. The CIS is a cell-specific L1 signal designed to indicate to the UEs whether a DL transmissions occurred on a LA SCell in the previous subframe. The CIS conveys at least one bit of information to indicate whether the preceding DL subframe on the LA SCell was transmitted (CIS value '1') or not (CIS value '0'). An example of the CIS being transmitted in the first OFDM symbol of DL subframe n+1 after unsuccessful SCell LBT at subframe n is shown in Figure 8.

In the example of Figure 8, the new CIS is transmitted on the first OFDM symbol of a PCell subframe, followed by legacy PDSCH and EPDCCH if configured. It is also possible for the CIS to span more than one OFDM symbol for increased time diversity, and for the transmit location of the CIS to be variable within the subframe. In this embodiment, the PDCCH is interleaved in frequency with the CIS and other legacy control signaling and reference signals in the first OFDM symbol, similar to the current interleaving of PDCCH, PHICH, and PCFICH. The encoding of the CIS may be based on the use of a repetition code, followed by phase-shift keying modulation and mapping to REs in the legacy PDCCH region. In another embodiment, a new block code with 2 codewords may be defined for the CIS, similar to the block encoding applied for the PCFICH.

UEs that are scheduled on LBT carriers attempt to decode the corresponding CIS on the PCell in the next TTI. This is different from PHICH timing where the HARQ ACK/NACK follows four subframes after the UL grant. In addition, the UE behavior needs to be specified for the following cases that may occur:
1. Scheduling grant is received for SCell and CIS on next PCell subframe indicates successful SCell transmission:
   UE assumes that the LA SCell transmitted the scheduled DL subframe. It applies existing Rel-12 procedures for processing the PDSCH region of the SCell DL subframe, with the understanding that CRS may not be present in all or part of the subframe.
2. Scheduling grant is received for SCell and CIS on next PCell subframe indicates no SCell transmission:
   UE assumes that the LA SCell failed to transmit the scheduled DL subframe. It does not use its received samples for that subframe for channel estimation, time-frequency tracking, RRM measurements, or decoding.
3. Scheduling grant is not decoded for SCell and CIS on next PCell subframe indicates successful SCell transmission:
   UE applies Rel-12 procedures for when no scheduling grant is detected.
4. Scheduling grant is received for SCell and CIS on next PCell subframe is not decoded successfully:
   UE assumes that the LA SCell failed to transmit the scheduled DL subframe. It does not use its received samples for that subframe for channel estimation, time-frequency tracking, RRM measurements, or decoding.
5. Neither scheduling grant nor CIS is detected:
   UE follows Rel-12 procedures for when no scheduling grant is detected.
The structure of the DL CIS is described next. In one embodiment, the CIS is a wideband signal spanning multiple RBs since it is a cell-specific, broadcast signal. The frequency span can be up to the DL system BW for robust detection by UEs. One CIS is defined per antenna port. The frequency-domain density is for example four equi-spaced REs per slot within a RB, with a different frequency-domain offset depending on the SCell ID. The frequency-domain start position of the CIS for a particular SCell can also be indicated to UEs using higher-layer signaling. As a non-limiting example, the CIS sequence can be based on a constant amplitude zero autocorrelation (CAZAC) sequence such as a Zadoff-Chu sequence.
In another embodiment, the DL CIS carries a bit map to indicate whether transmissions were sent on a set of SCells in the previous subframe.

In another embodiment, the CIS may be used by the eNB to indicate if discovery reference signals were successfully transmitted by the SCell in its designated transmission period.

Uplink CIS is described as follows.The motivation to use the CIS on the uplink is similar to the downlink case. The UL CIS allows the eNB to verify if scheduled UEs actually transmitted on their UL SCell grants after performing LBT. In one non-limiting embodiment, this can be implemented by allocating PUCCH Format 1 resource on the PCell for subframe n+1 to the UE. A UE shall transmit a PUCCH Format 1 signal in the allocated resource only if the UE has succeeded in acquiring UL transmission on the LA SCell after performing LBT. Absence of the PUCCH signal indicates to the eNB that LBT for the corresponding UE failed. It is a further teaching that a common pool of PUCCH Format 1 resources are allocated by the network via higher layer signaling to UE. The UE is provided the index to the PUCCH Format 1 resource it can use in the UL scheduling message sent to the UE.

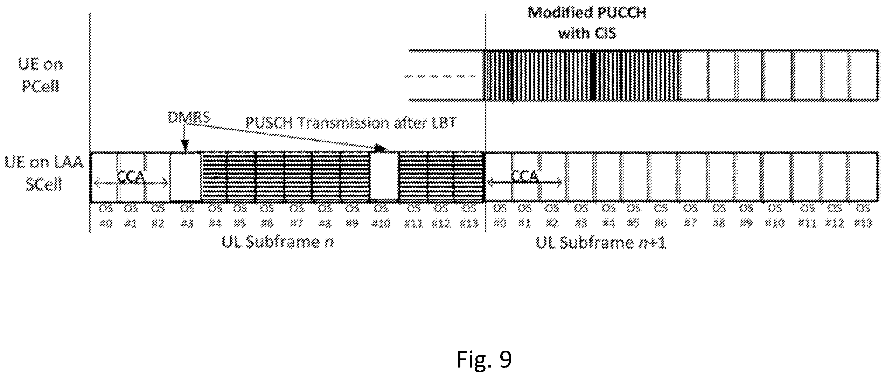

In another embodiment, the CIS is sent using a modified PUCCH format 3 with an additional bit in the next UL subframe transmitted by the UE on the PCell, as shown in Figure 9.

The encoding of the UL CIS can be similar to the encoding of ACK/NACK information in the PUCCH. The additional CIS information bit in the modified PUCCH is set to '1' if the UE transmitted on its UL grant in the previous subframe on the SCell, and to '0' otherwise. If the UE is not configured with PCell PUCCH resources in subframe n+1, it may transmit the CIS on the PCell PUSCH along with other uplink control information (UCI).

A new cross-carrier transmission indication signal is defined to indicate the success or lack thereof of DL and UL transmissions on a LBT carrier. The CIS is sent in the first subframe transmitted on the PCell after the scheduled SCell subframe. The DL CIS is used by UEs to verify if their scheduled grant was actually transmitted on the LBT carrier. The UL CIS is used by the eNB to verify if the scheduled UEs actually transmitted on their UL grant.

In the context of this description, wireless communication may be communication, in particular transmission and/or reception of data, via electromagnetic waves and/or an air interface, in particular radio waves, e.g. in a wireless communication network and/or utilizing a radio access technology (RAT). The communication may involve one or more than one terminal connected to a wireless communication network and/or more than one node of a wireless communication network and/or in a wireless communication network. It may be envisioned that a node in or for communication, and/or in, of or for a wireless communication network is adapted for communication utilizing one or more RATs, in particular LTE/E-UTRA. A communication may generally involve transmitting and/or receiving messages, in particular in the form of packet data. A message or packet may comprise control and/or configuration data and/or payload data and/or represent and/or comprise a batch of physical layer transmissions. Control and/or configuration data may refer to data pertaining to the process of communication and/or nodes and/or terminals of the communication. It may, e.g., include address data referring to a node or terminal of the communication and/or data pertaining to the transmission mode and/or spectral configuration and/or frequency and/or coding and/or timing and/or bandwidth as data pertaining to the process of communication or transmission, e.g. in a header.

Each node or terminal involved in communication may comprise radio circuitry and/or control circuitry and/or antenna circuitry, which may be arranged to utilize and/or implement one or more than one radio access technologies. Radio circuitry of a node or terminal may generally be adapted for the transmission and/or reception of radio waves, and in particular may comprise a corresponding transmitter and/or receiver and/or transceiver, which may be connected or connectable to antenna circuitry and/or control circuitry. Control circuitry of a node or terminal may comprise a controller and/or memory arranged to be accessible for the controller for read and/or write access. The controller may be arranged to control the communication and/or the radio circuitry and/or provide additional services. Circuitry of a node or terminal, in particular control circuitry, e.g. a controller, may be programmed to provide the functionality described herein. A corresponding program code may be stored in an associated memory and/or storage medium and/or be hardwired and/or provided as firmware and/or software and/or in hardware. A controller may generally comprise a processor and/or microprocessor and/or microcontroller and/or FPGA (Field-Programmable Gate Array) device and/or ASIC (Application Specific Integrated Circuit) device. More specifically, it may be considered that control circuitry comprises and/or may be connected or connectable to memory, which may be adapted to be accessible for reading and/or writing by the controller and/or control circuitry. Radio access technology may generally comprise, e.g., Bluetooth and/or Wifi and/or WIMAX and/or cdma2000 and/or GERAN and/or UTRAN and/or in particular E-Utran and/or LTE. A communication may in particular comprise a physical layer (PHY) transmission and/or reception, onto which logical channels and/or logical transmission and/or receptions may be imprinted or layered.

A node of a wireless communication network may be implemented as a terminal and/or user equipment and/or base station and/or relay node and/or any device generally adapted for communication in a wireless communication network, in particular cellular communication.

A cellular network may comprise a network node, in particular a radio network node, which may be connected or connectable to a core network, e.g. a core network with an evolved network core, e.g. according to LTE. A network node may e.g. be a base station. The connection between the network node and the core network/network core may be at least partly based on a cable/landline connection. Operation and/or communication and/or exchange of signals involving part of the core network, in particular layers above a base station or eNB, and/or via a predefined cell structure provided by a base station or eNB, may be considered to be of cellular nature or be called cellular operation. Operation and/or communication and/or exchange of signals without involvement of layers above a base station and/or without utilizing a predefined cell structure provided by a base station or eNB, may be considered to be D2D communication or operation, in particular, if it utilises the radio resources, in particular carriers and/or frequencies, and/or equipment (e.g. circuitry like radio circuitry and/or antenna circuitry, in particular transmitter and/or receiver and/or transceiver) provided and/or used for cellular operation.

A terminal may be implemented as a user equipment. A terminal or a user equipment (UE) may generally be a device configured for wireless device-to-device communication and/or a terminal for a wireless and/or cellular network, in particular a mobile terminal, for example a mobile phone, smart phone, tablet, PDA, etc. A user equipment or terminal may be a node of or for a wireless communication network as described herein, e.g. if it takes over some control and/or relay functionality for another terminal or node. It may be envisioned that terminal or a user equipment is adapted for one or more RATs, in particular LTE/E-UTRA. A terminal or user equipment may generally be proximity services (ProSe) enabled, which may mean it is D2D capable or enabled. It may be considered that a terminal or user equipment comprises radio circuitry and/control circuitry for wireless communication. Radio circuitry may comprise for example a receiver device and/or transmitter device and/or transceiver device. Control circuitry may include a controller, which may comprise a microprocessor and/or microcontroller and/or FPGA (Field-Programmable Gate Array) device and/or ASIC (Application Specific Integrated Circuit) device. It may be considered that control circuitry comprises or may be connected or connectable to memory, which may be adapted to be accessible for reading and/or writing by the controller and/or control circuitry. It may be considered that a terminal or user equipment is configured to be a terminal or user equipment adapted for LTE/E-UTRAN.

A base station may be any kind of base station of a wireless and/or cellular network adapted to serve one or more terminals or user equipments. It may be considered that a base station is a node or network node of a wireless communication network. A network node or base station may be adapted to provide and/or define and/or to serve one or more cells of the network and/or to allocate frequency and/or time resources for communication to one or more nodes or terminals of a network. Generally, any node adapted to provide such functionality may be considered a base station. It may be considered that a base station or more generally a network node, in particular a radio network node, comprises radio circuitry and/or control circuitry for wireless communication. It may be envisioned that a base station or network node is adapted for one or more RATs, in particular LTE/E-UTRA . Radio circuitry may comprise for example a receiver device and/or transmitter device and/or transceiver device. Control circuitry may include a controller, which may comprise a microprocessor and/or microcontroller and/or FPGA (Field-Programmable Gate Array) device and/or ASIC (Application Specific Integrated Circuit) device. It may be considered that control circuitry comprises or may be connected or connectable to memory, which may be adapted to be accessible for reading and/or writing by the controller and/or control circuitry. A base station may be arranged to be a node of a wireless communication network, in particular configured for and/or to enable and/or to facilitate and/or to participate in cellular communication, e.g. as a device directly involved or as an auxiliary and/or coordinating node. Generally, a base station may be arranged to communicate with a core network and/or to provide services and/or control to one or more user equipments and/or to relay and/or transport communications and/or data between one or more user equipments and a core network and/or another base station and/or be Proximity Service enabled. An eNodeB (eNB) may be envisioned as an example of a base station, e.g. according to an LTE standard. A base station may generally be proximity service enabled and/or to provide corresponding services. It may be considered that a base station is configured as or connected or connectable to an Evolved Packet Core (EPC) and/or to provide and/or connect to corresponding functionality. The functionality and/or multiple different functions of a base station may be distributed over one or more different devices and/or physical locations and/or nodes. A base station may be considered to be a node of a wireless communication network. Generally, a base station may be considered to be configured to be a coordinating node and/or to allocate resources in particular for cellular communication between two nodes or terminals of a wireless communication network, in particular two user equipments.

It may be considered for cellular communication there is provided at least one uplink (UL) connection and/or channel and/or carrier and at least one downlink (DL) connection and/or channel and/or carrier, e.g. via and/or defining a cell, which may be provided by a network node, in particular a base station or eNodeB . An uplink direction may refer to a data transfer direction from a terminal to a network node, e.g. base station and/or relay station. A downlink direction may refer to a data transfer direction from a network node, e.g. base station and/or relay node, to a terminal. UL and DL may be associated to different frequency resources, e.g. carriers and/or spectral bands. A cell may comprise at least one uplink carrier and at least one downlink carrier, which may have different frequency bands. A network node, e.g. a base station or eNodeB, may be adapted to provide and/or define and/or control one or more cells, e.g. a PCell and/or a LA cell.

A network node, in particular a base station, and/or a terminal, in particular a UE, may be adapted for communication in spectral bands (frequency bands) licensed and/or defined for LTE. In addition A network node, in particular a base station, and/or a terminal, in particular a UE, may be adapted for communication in freely available and/or unlicensed/LTE-unlicensed spectral bands (frequency bands), e.g. around 5GHz.

An LBT carrier may refer to a carrier or cell on which an LBT procedure is to be performed before transmitting, in particular in an unlicensed spectrum or frequency band. The expression LBT carrier may be used interchangeably with LA SCell or unlicensed cell or unlicensed carrier. A carrier may be associated to a spectrum and/or frequency band and/or a channel. A cell may have associated to it at least one channel or carrier; it may be considered that a cell comprises different carriers or channels for uplink or downlink. A cell may comprise one or more than one frequency bands (e.g. subcarriers) and/or channels for each data transmission direction (uplink and downlink). There may be different number of channels or frequency bands for uplink and downlink.

A LBT procedure may generally refer to a procedure determining whether a transmission is possible or admissible (in particular, for the node or terminal performing the LBT) to transmit in a given spectrum or frequency band or cell or carrier, in particular on a LA Scell or LBT carrier, and/or whether another transmission is taking place, which would indicate that no own transmission is possible.

A LBT procedure may comprise listening to a channel and/or spectrum and/or frequency band and/or carrier, on which it may be performed which may be intended for a transmission), in particular listening for transmission from another source and/or transmitter, which may comprise receiving and/or detecting the energy or power of transmissions or radiation in this channel and/or spectrum and/or frequency band. Failure of a LBT procedure may indicate that transmissions on the channel or cell or frequency band have been detected, so that it may be considered blocked by or for another transmitter, e.g. due to detection of a predetermined energy or power level. Failure of a LBT procedure may be considered to be equivalent to a determination of a channel/spectrum/band/carrier to be Busy. A successful LBT procedure may indicate the channel/spectrum/band/carrier to be Idle. Generally, a LBT procedure may be performed before transmission and/or before a scheduled transmission. It may be considered that a LBT procedure is performed frame- and/or subframe-based and/or in synchronization to the timing structure of a cell, in particular a PCell. A LBT procedure may comprise one or more CCA procedures. Listening and/or performing a CCA may comprise determining and/or measuring the power and/or energy on the channel/spectrum/band/carrier listened to (and/or on which CCA is performed) over predetermined time. The measured power or energy may be compared to a threshold to determine Busy or Idle states.

There may be considered:
A method for operating a terminal in a wireless communication network,
the terminal being configured, and/or being connected to the network, with and/or via a first cell and/or first uplink carrier and a second cell and/or second uplink carrier of the network, the method comprising:
- transmitting a cross-carrier indication signal on the first cell and/or first uplink carrier indicating whether the terminal has transmitted data on the second cell and/or second uplink carrier, in particular has transmitted data (on the second cell and/or second uplink carrier) before sending the CIS, in particular in a subframe before the subframe the CIS is sent in, which may be the subframe directly before the subframe the CIS is sent in.

The method may comprise performing, e.g. by the terminal, a LBT procedure on the second uplink carrier and/or second cell and/or transmitting, e.g. by the terminal, data on the second cell and/or second uplink carrier depending on the result of the LBT procedure. In particular, the method may comprise not transmitting data on the second cell and/or second uplink carrier if the LBT procedure results in a failure and/or upon detection of transmission by another source or transmitter; alternatively or additionally, the method may comprise transmitting data on the second cell and/or second uplink carrier if the LBT procedure results in no transmission being detected.

The method may comprise scheduling, e.g. by the terminal, a transmission (in particular before optionally performing LBT) on the second cell and/or second uplink carrier, in particular based on scheduling information and/or a scheduling grant received, which may be received, e.g. by the terminal, on a first downlink carrier associated to the first cell. The scheduling information or grant may be sent by a network and/or network node of the network, e.g. by a base station or eNodeB. Transmitting data on the second cell and/or the second uplink carrier may be based on the scheduling.

Additionally or alternatively, there may be envisioned a terminal for a wireless communication network,
the terminal being configured or configurable, and/or being connected or connectable to the network, with a and/or via a first cell and/or first uplink carrier and a second cell and/or second uplink carrier, and/or comprising a configuration module for configuring the terminal with and/or via a first cell and/or first uplink carrier and a second cell and/or second uplink carrier;
the terminal being adapted for, and/or comprising a transmitting module for, transmitting a cross-carrier indication signal on the first cell and/or first uplink carrier indicating whether the terminal has transmitted data on the second cell and/or second uplink carrier, in particular has transmitted data (on the second cell and/or second uplink carrier) before (e.g. directly before) sending the CIS, in particular in a subframe before the subframe the CIS is sent in, which may be the subframe directly before the subframe the CIS is sent in. The terminal may comprise a CIS determining module for determining and/or setting the CIS.

The terminal may be adapted, and/or comprise suitable antenna circuitry and/or radio circuitry and/or control circuitry, to be configurable with the first cell and/or first uplink carrier and the second cell and/or second uplink carrier and/or to carry out the other functionality described herein.

The terminal further may be adapted for, and/or comprise a LBT module for, performing a LBT procedure on the second uplink carrier and/or second cell, and/or transmitting data on the second cell and/or second uplink carrier depending on the result of the LBT procedure. In particular, the terminal and/or LBT module and/or transmission module may be adapted for not transmitting data on the second cell and/or second uplink carrier if the LBT procedure results in a failure and/or upon detection of transmission by another source or transmitter; alternatively or additionally, terminal and/or LBT module and/or transmitting module may be adapted for transmitting data on the second cell and/or second uplink carrier if the LBT procedure results in no transmission being detected.

The terminal may generally be adapted for, and/or comprise a scheduling module for, scheduling a transmission (in particular before optionally performing LBT) on the second cell and/or second uplink carrier, in particular based on scheduling information and/or a scheduling grant received, which may be received, e.g. by the terminal and/or a receiving module of the terminal, on a first downlink carrier associated to the first cell. The terminal and/or transmission module may be adapted for transmitting based on the scheduling and/or a the result of the LBT procedure.

There is also disclosed a method for operating a network node in a wireless communication network,
the network node being connected or connectable to a terminal with and/or via a first cell and/or first downlink carrier and a second cell and/or second downlink carrier, the method comprising:
- transmitting a cross-carrier indication signal on the first cell and/or first downlink carrier indicating whether the network node has transmitted data on the second cell and/or second downlink carrier, in particular has transmitted data (on the second cell and/or second downlink carrier) before (e.g. directly before) sending the CIS, in particular in a subframe before the subframe the CIS is sent in, which may be the subframe directly before the subframe the CIS is sent in. The network node may comprise a CIS determining module for determining and/or setting the CIS.

The method may comprise performing, e.g. by the network node, a LBT procedure on the second downlink carrier and/or second cell and/or transmitting data on the second cell and/or second downlink carrier depending on the result of the LBT procedure. In particular, the method may comprise not transmitting data on the second cell and/or second downlink carrier if the LBT procedure results in a failure and/or upon detection of transmission by another source or transmitter; alternatively or additionally, the method may comprise transmitting data on the second cell and/or second downlink carrier if the LBT procedure results in no transmission being detected.

The method may comprise scheduling, , e.g. by the network node, a transmission (in particular before optionally performing LBT) on the second cell and/or second downlink carrier, in particular based on scheduling information, e.g. on DL scheduling, which may be determined and/or received by the network node. Transmitting data on the second cell and/or the second downlink carrier may be based on the scheduling.

There may be envisioned a network node for a wireless communication network, the network node being connected or connectable to a terminal with and/or via a first cell and/or first downlink carrier and a second cell and/or second downlink carrier, and/or comprising a connection module for connecting to a terminal with and/or via a first cell and/or first downlink carrier and a second cell and/or second downlink carrier;

the network node being adapted for, and/or comprising a transmitting module for, transmitting a cross-carrier indication signal on the first cell and/or first downlink carrier indicating whether the network node has transmitted data on the second cell and/or second downlink carrier, in particular has transmitted data (on the second cell and/or second downlink carrier) before (e.g. directly before) sending the CIS, in particular in a subframe before the subframe the CIS is sent in, which may be the subframe directly before the subframe the CIS is sent in. The network node may comprise a CIS determining module for determining and/or setting the CIS.

The network node may be adapted, and/or comprise suitable antenna circuitry and/or radio circuitry and/or control circuitry, for connecting to a terminal with and/or via the first cell and/or first downlink carrier and the second cell and/or second downlink carrier and/or to carry out the other functionality of a network node described herein.

The network node further may be adapted for, and/or comprise a LBT module for, performing a LBT procedure on the second downlink carrier and/or transmitting data on the second cell and/or second downlink carrier depending on the result of the LBT procedure. In particular, the network node and/or LBT module and/or transmission module may be adapted for not transmitting data on the second cell and/or second downlink carrier if the LBT procedure results in a failure and/or upon detection of transmission by another source or transmitter; alternatively or additionally, the network node and/or LBT module and/or transmitting module may be adapted for transmitting data on the second cell and/or second downlink carrier if the LBT procedure results in no transmission being detected.

The network node may generally be adapted for, and/or comprise a scheduling module for, scheduling a transmission (in particular before optionally performing LBT) on the second cell and/or second downlink carrier, in particular based on scheduling information received and/or determined by the network node. The network node and/or transmission module may be adapted for transmitting based on the scheduling and/or the result of the LBT procedure.

There may be envisioned a method for operating a terminal in a wireless communication network,
the terminal being configured, and/or being connected to the network, with and/or via a first cell and/or first downlink carrier and a second cell and/or second downlink carrier of the network, the method comprising:
receiving data on the second cell and/or second downlink carrier;
receiving a CIS on the first cell and/or first downlink carrier; wherein the CIS may be a CIS sent by one of the network nodes and/or with one of the methods for operating a network node as disclosed herein; and/or the CIS may indicate whether a transmission on the second cell and/or second downlink carrier was provided by the network, in particular by a network node of the network as described herein, and/or intended for the terminal;
processing the data received on the second cell and/or second downlink carrier based on the CIS; in particular discarding the data if the CIS indicates a transmission failure and/or decoding the data if the CIS indicate transmission success.

There may be envisioned a method for operating a network node,
the network node being configured, and/or being connected to a terminal, with and/or via a first cell and/or first uplink carrier and a second cell and/or second uplink carrier of the network, the method comprising:
receiving data on the second cell and/or second uplink carrier;
receiving a CIS on the first cell and/or first uplink carrier; wherein the CIS may be a CIS sent by one of the terminal and/or with one of the methods for operating a terminal as disclosed herein; and/or the CIS may indicate whether a transmission on the second cell and/or second uplink carrier was provided by the terminal, in particular by a terminal as described herein, and/or intended for the network node;
processing the data received on the second cell and/or second uplink carrier based on the CIS; in particular discarding the data if the CIS indicates a transmission failure and/or decoding the data if the CIS indicate transmission success.

There may be envisioned a terminal for a wireless communication network,
the terminal being configured or configurable, and/or being connected or connectable to the network, with and/or via a first cell and/or first downlink carrier and a second cell and/or second downlink carrier of the network, and/or comprising a configuration module for configuring and/or connecting the terminal with and/or via a first cell and/or first downlink carrier and a second cell and/or second downlink carrier;
the terminal being adapted for, and/or comprising a receiving module for, receiving data on the second cell and/or second downlink carrier;
the terminal being further adapted for, and/or comprising a CIS receiving module for, receiving a CIS on the first cell and/or first downlink carrier; wherein the CIS may be a CIS sent by one of the network nodes and/or with one of the methods for operating a network node as disclosed herein; and/or the CIS may indicate whether a transmission on the second cell and/or second downlink carrier was provided by the network, in particular by a network node of the network as described herein, and/or intended for the terminal;
the terminal further being adapted for, and/or comprising a processing module for, processing the data received on the second cell and/or second downlink carrier based on the CIS; in particular discarding the data if the CIS indicates a transmission failure and/or decoding the data if the CIS indicate transmission success.

There may be envisioned a network node for a wireless communication network, the network node being connected or connectable to a terminal with and/or via a first cell and/or first uplink carrier and a second cell and/or second uplink carrier, and/or comprising a connecting module for connecting the network node with and/or via a first cell and/or first uplink carrier and a second cell and/or second uplink carrier;
the network node being adapted for, and/or comprising a receiving module for, receiving data on the second cell and/or second uplink carrier;
the network node being further adapted for, and/or comprising a CIS receiving module for, receiving a CIS on the first cell and/or first uplink carrier; wherein the CIS may be a CIS sent by one of the terminals and/or with one of the methods for operating a terminal as disclosed herein; and/or the CIS may indicate whether a transmission on the second cell and/or second uplink carrier was provided by the terminal, in particular by a terminal as described herein, and/or is intended for the network node;
the network node further being adapted for, and/or comprising a processing module for, processing the data received on the second cell and/or second uplink carrier based on the CIS; in particular discarding the data if the CIS indicates a transmission failure and/or decoding the data if the CIS indicate transmission success.

There may be considered a network node adapted for performing any one of the methods for operating a network node described herein.

There may be considered a terminal adapted for performing any one of the methods for operating a terminal described herein.

There is also disclosed a program product comprising code executable by control circuitry, the code causing the control circuitry to carry out and/or control any one of the method for operating a terminal or network node as described herein, in particular if executed on control circuitry, which may be control circuitry of a terminal or a network node as described herein.

Moreover, there is disclosed a carrier medium carrying and/or storing at least any one of the program products described herein and/or code executable by control circuitry, the code causing the control circuitry to perform and/or control at least any one of the methods described herein. Generally, a carrier medium may be accessible and/or readable and/or receivable by control circuitry. Storing data and/or a program product and/or code may be seen as part of carrying data and/or a program product and/or code. A carrier medium generally may comprise a guiding/transporting medium and/or a storage medium. A guiding/transporting medium may be adapted to carry and/or carry and/or store signals, in particular electromagnetic signals and/or electrical signals and/or magnetic signals and/or optical signals. A carrier medium, in particular a guiding/transporting medium, may be adapted to guide such signals to carry them. A carrier medium, in particular a guiding/transporting medium, may comprise the electromagnetic field, e.g. radio waves or microwaves, and/or optically transmissive material, e.g. glass fiber, and/or cable. A storage medium may comprise at least one of a memory, which may be volatile or non-volatile, a buffer, a cache, an optical disc, magnetic memory, flash memory, etc.

The first cell may generally be a cell of a licensed cellular network, e.g. LTE. It may be a PCell and/or a cell intended to carry control and command information, in particular for the PCell and/or the second cell, for example a LA SCell.

The second cell and/or second uplink carrier, respectively second downlink carrier, generally may be a cell and/or uplink carrier, respectively downlink carrier, of a non-licensed network and/or a cell and/or uplink carrier, respectively downlink carrier, on which a LBT procedure has to be performed/has been performed before transmission of data, in particular a LA SCell. Control information /scheduling for the second cell may be transmitted on the first cell, e.g. to provide licensed-assisted controlling and scheduling.

An uplink carrier may generally be or indicate a carrier and/or frequency band intended and/or used for uplink transmissions.

A downlink carrier may generally be or indicate a carrier and/or frequency band intended and/or used for downlink transmissions.

The cross-carrier indication signal may comprise one or more bits. Generally, the CIS may indicate transmission of data already finished and/or be sent after transmission of the data indicated. The CIS may refer to data transmitted by the node or terminal transmitting and/or providing the CIS. A transmission success indication of the CIS may indicate that a transmission of data occurred and/or LBT procedure allowed transmission; a transmission failure indication of the CIS may indicate that no transmission occurred and/or the LBT indicated failure.

Processing of data may comprise decoding and/or demodulating data and/or performing an acknowledgment procedure (e.g., ARQ, HARQ, etc.) on the data. Discarding data may comprise deleting and/or not decoding data.

A terminal being configured with a cell and/or carrier may be in a state in which it may communicate (transmit and/or receive data) using the cell or carrier, e.g. being registered with the network for communication and/or being synchronized to the cell and/or carrier.

Generally, a node being connected or connectable to a terminal with and/or via a cell or carrier may be adapted for communicating and/or communicate with the terminal using this cell or carrier. A terminal being connected or connectable to a network with a cell or carrier may be adapted for communicating and/or communicate with the terminal using this cell or carrier. Connection to a network may refer to connection to at least one node of the network.

Data may refer to any kind of data, in particular any one of and/or any combination of control data or user data or payload data. Control data may refer to data controlling and/or scheduling and/or pertaining to the process of data transmission and/or the network or terminal operation.

Receiving or transmitting on a cell or carrier may refer to receiving or transmitting utilizing a frequency (band) or spectrum associated to the cell or carrier.

A wireless communication network may comprise at least one network node, in particular a network node as described herein. A terminal connected or communicating with a network may be considered to be connected or communicating with at least one network node, in particular any one of the network nodes described herein.

It should be noted that a method for operating a terminal may comprise both transmitting a CIS as described herein and receiving a CIS as described herein. The CISs may be different CISs, e.g. in terms of signal structure and/or content and/or modulation and/or coding. The received CIS may be received from a network, in particular a network node, which may be a serving node and/or radio node and/or base station like an eNodeB.

Also, a terminal may be adapted both for transmitting a CIS as described herein and receiving a CIS as described herein. The CISs may be different CISs, e.g. in terms of signal structure and/or content and/or modulation and/or coding. The received CIS may be received from a network, in particular a network node, which may be a serving node and/or radio node and/or base station like an eNodeB.

It should be noted that a method for operating a network node may comprise both transmitting a CIS as described herein and receiving a CIS as described herein. The CISs may be different CISs, e.g. in terms of signal structure and/or content and/or modulation and/or coding. The received CIS may be received from a terminal

Also, a network node may be adapted both for transmitting a CIS as described herein and receiving a CIS as described herein. The CISs may be different CISs, e.g. in terms of signal structure and/or content and/or modulation and/or coding. The received CIS may be received from a terminal.

It may also be envisioned that for terminal-to-terminal communication (e.g., D2D or Proximity Services), CIS are transmitted by a terminal to a terminal. A terminal may be adapted for receiving CIS from, and/or transmitting CIS to, another terminal.

A CIS transmitted by a network node may be different from a CIS transmitted by a terminal, e.g. regarding signal structure and/or content and/or modulation and/or coding.

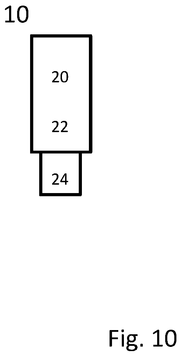

Figure 10 schematically shows a terminal 10, which may be implemented in this example as a user equipment. Terminal 10 comprises control circuitry 20, which may comprise a controller connected to a memory. A receiving module and/or transmitting module and/or control or processing module and/or CIS receiving module and/or scheduling module, may be implemented in and/or executable by, the control circuitry 20, in particular as module in the controller. Terminal 10 also comprises radio circuitry 22 providing receiving and transmitting or transceiving functionality, the radio circuitry 22 connected or connectable to the control circuitry. An antenna circuitry 24 of the terminal 10 is connected or connectable to the radio circuitry 22 to collect or send and/or amplify signals. Radio circuitry 22 and the control circuitry 20 controlling it are configured for cellular communication with a network on a first cell /carrier and a second cell /carrier, in particular utilizing E-UTRAN/LTE resources as described herein. The terminal 10 may be adapted to carry out any of the methods for operating a terminal disclosed herein; in particular, it may comprise corresponding circuitry, e.g. control circuitry.

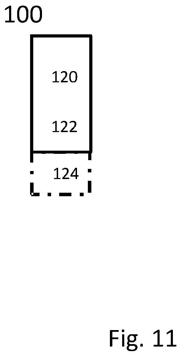

Figure 11 schematically show a network node or base station 100, which in particular may be an eNodeB. Network node 100 comprises control circuitry 120, which may comprise a controller connected to a memory. A receiving module and/or transmitting module and/or control or processing module and/or scheduling module and/or CIS receiving module, may be implemented in and/or executable by the control circuitry 120. The control circuitry is connected to control radio circuitry 122 of the network node 100, which provides receiver and transmitter and/or transceiver functionality. An antenna circuitry 124 may be connected or connectable to radio circuitry 122 for signal reception or transmittance and/or amplification. The network node 100 may be adapted to carry out any of the methods for operating a network node disclosed herein; in particular, it may comprise corresponding circuitry, e.g. control circuitry.

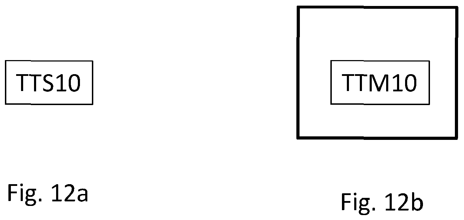

Figure 12a schematically shows a method for operating a terminal, which may be a terminal as described herein. The method comprises an action TTS 10 of transmitting a cross-carrier indication signal, CIS, on the first cell and/or first uplink carrier indicating whether the terminal has transmitted data on the second cell and/or second uplink carrier.

Figure 12b shows a terminal comprising a transmitting module TTM 10 adapted for performing action TTS10.

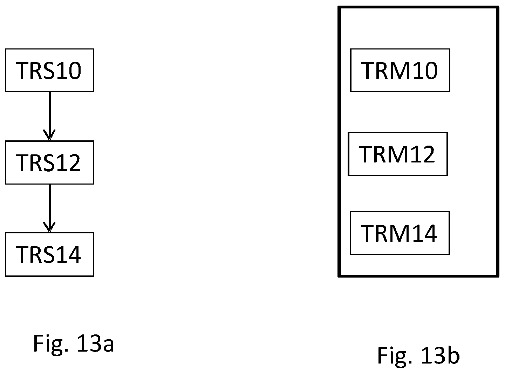

Figure 13a schematically shows another method for operating a terminal, which may be a terminal as described herein. The method comprises an action TRS 10 of receiving data on a second cell and/or second downlink carrier. The method also comprises an action TRS 12 of receiving a cross-carrier indication signal, CIS, on a first cell and/or first downlink carrier, wherein the CIS indicates whether a transmission on the second cell and/or second downlink carrier was provided. The method further comprises an action TRS 14 of processing the data received on the second cell and/or second downlink carrier based on the CIS.

Figure 13b schematically shows another terminal, which may be a terminal as described herein. The terminal comprises a data receiving module TRM10 for performing action TRS 10. Moreover, the terminal comprises a CIS receiving module TRM 12 for performing action TRS 12. The terminal further comprises a processing module TRM 14 for performing action TRS 14.

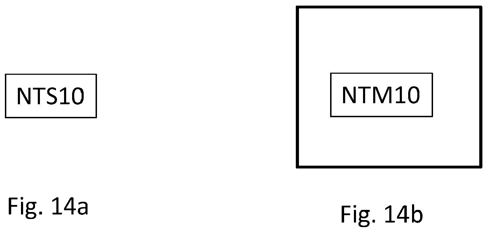

Figure 14a schematically shows a method for operating a network node, which may be a network node as described herein. The method comprises an action NTS 10 of transmitting a cross-carrier indication signal, CIS, on the first cell and/or first uplink carrier indicating whether the network node has transmitted data on the second cell and/or second uplink carrier.

Figure 14b shows a network node comprising a transmitting module NTM 10 adapted for performing action NTS10.

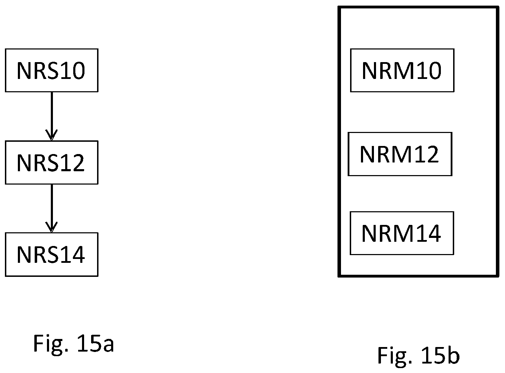

Figure 15a schematically shows another method for operating a network node, which may be a network node as described herein. The method comprises an action NRS 10 of receiving data on a second cell and/or second downlink carrier. The method also comprises an action NRS 12 of receiving a cross-carrier indication signal, CIS, on a first cell and/or first downlink carrier, wherein the CIS indicates whether a transmission on the second cell and/or second downlink carrier was provided. The method further comprises an action NRS 14 of processing the data received on the second cell and/or second downlink carrier based on the CIS.

Figure 15b schematically shows another network node, which may be a network node as described herein. The network node comprises a data receiving module NRM 10 for performing action NRS 10. Moreover, the network node comprises a CIS receiving module NRM 12 for performing action NRS 12. The network node further comprises a processing module TRM 14 for performing action TRS 14.

| Abbreviation | Explanation |
|---|---|
| CCA | Clear Channel Assessment |
| DCI | Downlink Control Information |
| DL | Downlink |
| DMRS | Demodulation Reference Signals |
| eNB | evolved NodeB, base station |
| TTI | Transmission-Time Interval |
| UE | User Equipment |
| UL | Uplink |
| LA | Licensed Assisted |
| LA | Licensed Assisted Access |
| DRS | Discovery Reference Signal |
| SCell | Secondary Cell |
| SRS | Sounding Reference Signal |
| LBT | Listen-before-talk |
| PCFICH | Physical Control Format Indicator Channel |
| PDCCH | Physical Downlink Control Channel |
| PUSCH | Physical Uplink Shared Channel |
| PUCCH | Physical Uplink Control Channel |
| RRM | Radio Resource Management |
| CIS | Transmission Confirmation Signal |
| | |
| 3GPP | 3^{rd} Generation Partnership Project |
| Ack/Nack | Acknowledgment/Non-Acknowledgement, also A/N |
| AP | Access point |
| B1, B2, ...Bn | Bandwidth of signals, in particular carrier bandwidth Bn assigned to corresponding carrier or frequency f1, f2, ..., fn |
| BER/BLER | Bit Error Rate, BLock Error Rate; |
| BS | Base Station |
| CA | Carrier Aggregation |
| CoMP | Coordinated Multiple Point Transmission and Reception |
| CQI | Channel Quality Information |
| CRS | Cell-specific Reference Signal |
| CIS | Channel State Information |
| CIS-RS | CIS reference signal |
| D2D | Device-to-device |
| DL | Downlink |
| EPDCCH | Enhanced Physical DL Control CHannel |
| DL | Downlink; generally referring to transmission of data to a node/into a direction further away from network core (physically and/or logically); in particular from a base station or eNodeB to a D2D enabled node or UE; often uses specified spectrum/bandwidth different from UL (e.g. LTE) |
| eNB | evolved NodeB; a form of base station, also called eNodeB |
| E-UTRA/N RAT | Evolved UMTS Terrestrial Radio Access/Network, an example of a |
| f1, f2, f3,...,fn | carriers/carrier frequencies; different numbers may indicate that the referenced carriers/frequencies are different |
| f1_UL,..., fn_UL | Carrier for Uplink/in Uplink frequency or band |
| f1_DL,...,fn_DL | Carrier for Downlink/in Downlink frequency or band |
| FDD | Frequency Division Duplexing |
| ID | Identity |
| L1 | Layer 1 |
| L2 | Layer 2 |
| LTE | Long Term Evolution, a telecommunications standard |
| MAC | Medium Access Control |
| MBSFN | Multiple Broadcast Single Frequency Network |
| MDT | Minimisation of Drive Test |
| NW | Network |
| OFDM | Orthogonal Frequency Division Multiplexing |
| O&M | Operational and Maintenance |
| OSS | Operational Support Systems |
| PC | Power Control |
| PDCCH | Physical DL Control CHannel |
| PH | Power Headroom |
| PHR | Power Headroom Report |
| PSS | Primary Synchronization Signal |
| PUSCH | Physical Uplink Shared CHannel |
| R1, R2, ...,Rn Resources, | in particular time-frequency resources, in particular assigned to corresponding carrier f1, f2, ..., fn |
| RA | Random Access |
| RACH | Random Access CHannel |
| RAT | Radio Access Technology |
| RE | Resource Element |
| RB | Resource Block |
| RRH | Remote radio head |
| RRM | Radio Resource Management |
| RRU | Remote radio unit |
| RSRQ | Reference signal received quality |
| RSRP | Reference signal received power |
| RSSI | Received signal strength indicator |
| RX | reception/receiver, reception-related |
| SA | Scheduling Assignment |
| SINR/SNR | Signal-to-Noise-and-Interference Ratio; Signal-to-Noise Ratio |
| SFN | Single Frequency Network |
| SON | Self Organizing Network |
| SSS | Secondary Synchronization Signal |
| TPC | Transmit Power Control |
| TX | transmission/transmitter, transmission-related |
| TDD | Time Division Duplexing |
| UE | User Equipment |
| UL | Uplink; generally referring to transmission of data to a node/into a direction closer to a network core (physically and/or logically); in particular from a D2D enabled node or UE to a base station or eNodeB; in the context of D2D, it may refer to the spectrum/bandwidth utilized for transmitting in D2D, which may be the same used for UL communication to a eNB in cellular communication; in some D2D variants, transmission by all devices involved in D2D communication may in some variants generally be in UL spectrum/bandwidth/carrier/frequency |

These and other abbreviations may be used according to LTE standard definitions.

## Claims

1. Method for operating a first node in a wireless communication network, the first node being configured with, in a licensed band, first cell and/or first carrier and, in an unlicensed band, a second cell and/or second carrier, the method comprising:
transmitting, to a second node, a cross-carrier indication signal, CIS, on the first cell and/or first carrier indicating whether the first node has transmitted data according to cross-carrier scheduling on the second cell and/or second carrier, wherein transmitting data on the second cell and/or second carrier depends on the result of a listen-before-talk, LBT, procedure.

2. Method according to claim 1, wherein the first node is a terminal (10), the second node is a network node (100) and the first and second carriers are first and second uplink carriers.

3. Method according to claim 1, wherein the first node is a network node (100), the second node is a terminal (10) and the first and second carriers are first and second downlink carriers.

4. First node for a wireless communication network,
the first node being configured with, in a licensed band, a first cell and/or first carrier and, in an unlicensed band, a second cell and/or second carrier,
the first node being adapted for transmitting, to a second node, a cross-carrier indication signal, CIS, on the first cell and/or first carrier indicating whether the first node has transmitted data according to cross-carrier scheduling on the second cell and/or second carrier, the first node being adapted for transmitting data on the second cell and/or second carrier depending on the result of a listen-before-talk, LBT, procedure.

5. First node according to claim 4, wherein the first node is a terminal (10), the second node is a network node (100) and the first and second carriers are first and second uplink carriers.

6. First node according to claim 4, wherein the first node is a network node (100), the second node is a terminal (10) and the first and second carriers are first and second downlink carriers.

7. Method for operating a second node,
the second node being connected to a first node via, in a licensed band, a first cell and/or first carrier and, in an unlicensed band, a second cell and/or second carrier, the method comprising:
receiving, from the first node, data on the second cell and/or second carrier, wherein transmitting data by the first node on the second cell and/or second carrier is according to cross-carrier scheduling and depends on the result of a listen-before-talk, LBT, procedure;
receiving, from the first node, a cross-carrier indication signal, CIS, on the first cell and/or first carrier, wherein the CIS indicates whether data transmission on the second cell and/or second carrier was provided by the first node according to said cross-carrier scheduling;
processing the data received on the second cell and/or second carrier based on the CIS.

8. Method according to claim 7, wherein the first node is a terminal (10), the second node is a network node (100) and the first and second carriers are first and second uplink carriers.

9. Method according to claim 7, wherein the first node is a network node (100), the second node is a terminal (10) and the first and second carriers are first and second downlink carriers.

10. Second node for a wireless communication network, the second node being connected to a first node via, in a licensed band, a first cell and/or first carrier and, in an unlicensed band, a second cell and/or second carrier,
the second node being adapted for receiving data from the first node on the second cell and/or second carrier, wherein transmitting data by the first node on the second cell and/or second carrier is according to cross-carrier scheduling and depends on the result of a listen-before-talk, LBT, procedure;
the second node being further adapted for receiving a cross-carrier indication signal, CIS, from the first node on the first cell and/or first carrier; wherein the CIS indicates whether data transmission on the second cell and/or second carrier was provided by the first node according to said cross-carrier scheduling;
the second node further being adapted for processing the data received on the second cell and/or second carrier based on the CIS.

11. Second node according to claim 10, wherein the first node is a terminal (10), the second node is a network node (100) and the first and second carriers are first and second uplink carriers.

12. Second node according to claim 10, wherein the first node is a network node (100), the second node is a terminal (10) and the first and second carriers are first and second downlink carriers.

13. Program product comprising code executable by control circuitry, the code causing the control circuitry to carry out and/or control a method according to one of claims 1-3, 7-9.

14. Carrier medium carrying and/or storing a program product according to claim 13 and/or code executable by control circuitry, the code causing the control circuitry to perform and/or control a method according to one of claims 1-3, 7-9.

## Patentansprüche

1. Verfahren zum Betreiben eines ersten Knotens in einem drahtlosen Kommunikationsnetz, wobei der erste Knoten in einem lizenzierten Frequenzband mit einer ersten Zelle und/oder einem ersten Träger und in einem unlizenzierten Frequenzband mit einer zweiten Zelle und/oder einem zweiten Träger konfiguriert ist, wobei das Verfahren umfasst:
Übertragen eines trägerübergreifenden Anzeigesignals, CIS, an einen zweiten Knoten,
an der ersten Zelle und/oder dem ersten Träger, Angeben, ob der erste Knoten Daten gemäß trägerübergreifender Planung an der zweiten Zelle und/oder dem zweiten Träger gesendet hat, wobei das Übertragen von Daten an der zweiten Zelle und/oder dem zweiten Träger von dem Ergebnis eines Listen-before-Talk-Vorgangs (LBT-Vorgangs) abhängt.

2. Verfahren nach Anspruch 1, wobei der erste Knoten ein Endgerät (10) ist, der zweite Knoten ein Netzknoten (100) ist und der erste und der zweite Träger ein erster und ein zweiter Uplink-Träger sind.

3. Verfahren nach Anspruch 1, wobei der erste Knoten ein Netzknoten (100) ist, der zweite Knoten ein Endgerät (10) ist und der erste und der zweite Träger ein erster und ein zweiter Downlink-Träger sind.

4. Erster Knoten für ein drahtloses Kommunikationsnetz,
wobei der erste Knoten in einem lizenzierten Frequenzband mit einer ersten Zelle und/oder einem ersten Träger und in einem unlizenzierten Frequenzband mit einer zweiten Zelle und/oder einem zweiten Träger konfiguriert ist,
wobei der erste Knoten dazu angepasst ist, an einen zweiten Knoten ein trägerübergreifendes Angabesignal, CIS, an der ersten Zelle und/oder dem ersten Träger zu übertragen, das angibt, ob der erste Knoten Daten gemäß trägerübergreifender Planung an der zweiten Zelle und/oder dem zweiten Träger gesendet hat, wobei der erste Knoten dazu angepasst ist, Daten an der zweiten Zelle und/oder dem zweiten Träger abhängig von dem Ergebnis eines Listen-before-Talk-Vorgangs (LBT-Vorgangs) zu übertragen.

5. Erster Knoten nach Anspruch 4, wobei der erste Knoten ein Endgerät (10) ist, der zweite Knoten ein Netzknoten (100) ist und der erste und der zweite Träger ein erster und ein zweiter Uplink-Träger sind.

6. Erster Knoten nach Anspruch 4, wobei der erste Knoten ein Netzknoten (100) ist, der zweite Knoten ein Endgerät (10) ist und der erste und der zweite Träger ein erster und ein zweiter Downlink-Träger sind.

7. Verfahren zum Betreiben eines zweiten Knotens,
wobei der zweite Knoten in einem lizenzierten Frequenzband über eine erste Zelle und/oder einen ersten Träger und in einem unlizenzierten Frequenzband über eine zweite Zelle und/oder einen zweiten Träger mit einem ersten Knoten verbunden ist, wobei das Verfahren umfasst:
Empfangen von Daten an der zweiten Zelle und/oder dem zweiten Träger von dem ersten Knoten, wobei das Übertragen von Daten durch den ersten Knoten an der zweiten Zelle und/oder dem zweiten Träger gemäß trägerübergreifender Planung erfolgt und von dem Ergebnis eines Listen-before-Talk-Vorgangs (LBT-Vorgangs) abhängt;
Empfangen eines trägerübergreifenden Angabesignals, CIS, von dem ersten Knoten an der ersten Zelle und/oder dem ersten Träger, wobei das CIS angibt, ob Datenübertragung an der zweiten Zelle und/oder dem zweiten Träger durch den ersten Knoten gemäß der trägerübergreifenden Planung bereitgestellt wurde;
Verarbeiten der an der zweiten Zelle und/oder dem zweiten Träger empfangenen Daten auf Grundlage des CIS.

8. Verfahren nach Anspruch 7, wobei der erste Knoten ein Endgerät (10) ist, der zweite Knoten ein Netzknoten (100) ist und der erste und der zweite Träger ein erster und ein zweiter Uplink-Träger sind.

9. Verfahren nach Anspruch 7, wobei der erste Knoten ein Netzknoten (100) ist, der zweite Knoten ein Endgerät (10) ist und der erste und der zweite Träger ein erster und ein zweiter Downlink-Träger sind.

10. Zweiter Knoten für ein drahtloses Kommunikationsnetz, wobei der zweite Knoten in einem lizenzierten Frequenzband über eine erste Zelle und/oder einen ersten Träger und in einem unlizenzierten Frequenzband über eine zweite Zelle und/oder einen zweiten Träger mit einem ersten Knoten verbunden ist,
wobei der zweite Knoten zum Empfangen von Daten an der zweiten Zelle und/oder dem zweiten Träger von dem ersten Knoten angepasst ist, wobei das Übertragen von Daten durch den ersten Knoten an der zweiten Zelle und/oder dem zweiten Träger gemäß trägerübergreifender Planung erfolgt und von dem Ergebnis eines Listen-before-Talk-Vorgangs (LBT-Vorgangs) abhängt;
wobei der zweite Knoten ferner dazu angepasst ist, ein trägerübergreifendes Angabesignal, CIS, von dem ersten Knoten an der ersten Zelle und/oder dem ersten Träger zu empfangen; wobei das CIS anzeigt, ob eine Datenübertragung an der zweiten Zelle und/oder dem zweiten Träger durch den ersten Knoten gemäß trägerübergreifender Planung bereitgestellt wurde;
wobei der zweite Knoten ferner dazu angepasst ist, die an der zweiten Zelle und/oder dem zweiten Träger empfangenen Daten auf Grundlage des CIS zu verarbeiten.

11. Zweiter Knoten nach Anspruch 10, wobei der erste Knoten ein Endgerät (10) ist, der zweite Knoten ein Netzknoten (100) ist und der erste und der zweite Träger ein erster und zweiter ein Uplink-Träger sind.

12. Zweiter Knoten nach Anspruch 10, wobei der erste Knoten ein Netzknoten (100) ist, der zweite Knoten ein Endgerät (10) ist und der erste und der zweite Träger ein erster und ein zweiter Downlink-Träger sind.

13. Programmprodukt, umfassend Code, der durch eine Steuerschaltung ausführbar ist, wobei der Code die Steuerschaltung veranlasst, ein Verfahren nach einem der Ansprüche 1 bis 3, 7 bis 9 auszuführen und/oder zu steuern.

14. Trägermedium, das ein Programmprodukt nach Anspruch 13 und/oder Code, der durch eine Steuerschaltung ausführbar ist, trägt und/oder speichert, wobei der Code die Steuerschaltung veranlasst, ein Verfahren nach einem der Ansprüche 1 bis 3, 7 bis 9 auszuführen und/oder zu steuern.

## Revendications

1. Procédé d'exploitation d'un premier noeud dans un réseau de communication sans fil, le premier noeud étant configuré avec, dans une bande sous licence, une première cellule et/ou une première porteuse et, dans une bande sans licence, une deuxième cellule et/ou une deuxième porteuse, le procédé comprenant :
la transmission, vers un deuxième noeud, d'un signal d'indication inter-porteuses, CIS,
sur la première cellule et/ou la première porteuse indiquant si le premier noeud a transmis des données selon une planification inter-porteuses sur la deuxième cellule et/ou la deuxième porteuse, dans lequel la transmission de données sur la deuxième cellule et/ou la deuxième porteuse dépend du résultat d'une procédure écouter avant de parler, LBT.

2. Procédé selon la revendication 1, dans lequel le premier noeud est un terminal (10), le deuxième noeud est un noeud de réseau (100) et les première et deuxième porteuses sont des première et deuxième porteuses de liaison montante.

3. Procédé selon la revendication 1, dans lequel le premier noeud est un noeud de réseau (100), le deuxième noeud est un terminal (10) et les première et deuxième porteuses sont des première et deuxième porteuses de liaison descendante.

4. Premier noeud pour un réseau de communication sans fil,
le premier noeud étant configuré avec, dans une bande sous licence, une première cellule et/ou une première porteuse et, dans une bande sans licence, une deuxième cellule et/ou une deuxième porteuse,
le premier noeud étant conçu pour transmettre, à un deuxième noeud, un signal d'indication inter-porteuses, CIS, sur la première cellule et/ou la première porteuse indiquant si le premier noeud a transmis des données selon une planification inter-porteuses sur la deuxième cellule et/ou la deuxième porteuse, le premier noeud étant conçu pour transmettre des données sur la deuxième cellule et/ou la deuxième porteuse en fonction du résultat d'une procédure écouter avant de parler, LBT.

5. Premier noeud selon la revendication 4, dans lequel le premier noeud est un terminal (10), le deuxième noeud est un noeud de réseau (100) et les première et deuxième porteuses sont des première et deuxième porteuses de liaison montante.

6. Premier noeud selon la revendication 4, dans lequel le premier noeud est un noeud de réseau (100), le deuxième noeud est un terminal (10) et les première et deuxième porteuses sont des première et deuxième porteuses de liaison descendante.

7. Procédé d'exploitation d'un deuxième noeud,
le deuxième noeud étant connecté à un premier noeud via, dans une bande sous licence, une première cellule et/ou une première porteuse et, dans une bande sans licence, une deuxième cellule et/ou une deuxième porteuse, le procédé comprenant :
la réception, depuis le premier noeud, de données sur la deuxième cellule et/ou la deuxième porteuse, dans lequel la transmission de données par le premier noeud sur la deuxième cellule et/ou la deuxième porteuse est selon une planification inter-porteuses et dépend du résultat d'une procédure écouter avant de parler, LBT ;
la réception, depuis le premier noeud, d'un signal d'indication inter-porteuses, CIS, sur la première cellule et/ou la première porteuse, dans lequel le CIS indique si une transmission de données sur la deuxième cellule et/ou la deuxième porteuse a été fournie par le premier noeud selon ladite planification inter-porteuses ;
le traitement des données reçues sur la deuxième cellule et/ou la deuxième porteuse sur la base du CIS.

8. Procédé selon la revendication 7, dans lequel le premier noeud est un terminal (10), le deuxième noeud est un noeud de réseau (100) et les première et deuxième porteuses sont des première et deuxième porteuses de liaison montante.

9. Procédé selon la revendication 7, dans lequel le premier noeud est un noeud de réseau (100), le deuxième noeud est un terminal (10) et les première et deuxième porteuses sont des première et deuxième porteuses de liaison descendante.

10. Deuxième noeud pour un réseau de communication sans fil, le deuxième noeud étant connecté à un premier noeud via, dans une bande sous licence, une première cellule et/ou une première porteuse et, dans une bande sans licence, une deuxième cellule et/ou une deuxième porteuse,
le deuxième noeud étant conçu pour recevoir des données depuis le premier noeud sur la deuxième cellule et/ou la deuxième porteuse, dans lequel la transmission de données par le premier noeud sur la deuxième cellule et/ou la deuxième porteuse est selon une planification inter-porteuses et dépend du résultat d'une procédure écouter avant de parler, LBT ;
le deuxième noeud étant conçu en outre pour recevoir un signal d'indication inter-porteuses, CIS, depuis le premier noeud sur la première cellule et/ou la première porteuse ; dans lequel le CIS indique si une transmission de données sur la deuxième cellule et/ou la deuxième porteuse a été fournie par le premier noeud selon ladite planification inter-porteuses ;
le deuxième noeud étant en outre conçu pour traiter les données reçues sur la deuxième cellule et/ou la deuxième porteuse sur la base du CIS.

11. Deuxième noeud selon la revendication 10, dans lequel le premier noeud est un terminal (10), le deuxième noeud est un noeud de réseau (100) et les première et deuxième porteuses sont des première et deuxième porteuses de liaison montante.

12. Deuxième noeud selon la revendication 10, dans lequel le premier noeud est un noeud de réseau (100), le deuxième noeud est un terminal (10) et les première et deuxième porteuses sont des première et deuxième porteuses de liaison descendante.

13. Produit programme comprenant un code exécutable par un circuit de commande, le code amenant le circuit de commande à effectuer et/ou à commander un procédé selon l'une quelconque des revendications 1 à 3, 7 à 9.

14. Milieu de porteuse portant et/ou stockant un programme informatique selon la revendication 13 et/ou un code exécutable par un circuit de commande, le code amenant le circuit de commande à mettre en oeuvre et/ou à commander un procédé selon l'une quelconque des revendications 1 à 3, 7 à 9.
